# EUROPÄISCHE PATENTSCHRIFT

(11) **EP 3 061 877 B1**
(45) Veröffentlichungstag und Bekanntmachung des Hinweises auf die Patenterteilung: **13.05.2020**
(21) Anmeldenummer: 16000299.4
(22) Anmeldetag: 05.02.2016
(51) Int. Cl.: E03C 1/04

(54) **SANITÄRARMATUR MIT EINER MIT EINER KLAMMER BEFESTIGTEN SCHLAUCHVERBINDUNG**
SANITARY FITTING WITH A HOSE CONNECTION FIXED WITH A CLAMP
ROBINETTERIE COMPRENANT UN RACCORD DE TUYAU FIXE A L'AIDE D'UNE PINCE

(30) Priorität: 25.02.2015 DE 102015002257
(43) Veröffentlichungstag der Anmeldung: 31.08.2016
(73) Patentinhaber: Grohe AG, 58675 Hemer (DE)
(72) Erfinder: Stölzel, Uwe, 58710 Menden (DE)

(56) Entgegenhaltungen:
- EP-A1- 2 778 300
- AT-B- 405 968
- DE-A1-102007 043 309
- US-A1- 2012 018 009
- US-A1- 2012 018 020
- US-A1- 2014 015 244

## Beschreibung

Die vorliegende Erfindung betrifft eine Sanitärarmatur, die regelmäßig in Zusammenhang mit Waschbecken, Spülbecken, Duschen oder Badewannen Verwendung findet, gemäß dem Oberbegriff von Anspruch 1. Solche Sanitärarmaturen dienen insbesondere der bedarfsgerechten Bereitstellung eines Mischwassers mit einer gewünschten Mischwassertemperatur.

Aus dem Stand der Technik sind Sanitärarmaturen bekannt, bei denen Trinkwasser in einem Armaturengehäuse durch einen Messingeinsatz geführt wird und folglich mit Messing in Berührung kommen. Solche Messingeinsätze werden regelmäßig in einem Armaturengehäuse aus Zink-Druckguss verbaut und müssen daher zur Bereitstellung einer galvanischen Trennung vernickelt oder verchromt werden. Insbesondere Nickelbeschichtungen sind jedoch in einigen Ländern problematisch, weil diese zu unzulässigen Nickelbelastungen des Trinkwassers führen können. Weiterhin werden bei solchen Sanitärarmaturen Zulaufschläuche und ein Mischwasserausgang als Lötbaugruppe in das Messinggehäuse geschraubt und verklebt. Beim Austausch eines Zulaufschlauchs muss die Sanitärarmatur daher aufwendig demontiert werden.

Aus der EP 2 2778 300 A1 ist zudem eine Sanitärarmatur mit einem Armaturengehäuse sowie einem Mischventil bekannt, wobei zwei Zuführschläuche in das Mischventil münden. Die Zuführschläuche sind mit einer von einer Umfangsseite in das Mischventil eingesetzten Klammer an dem Mischventil befestigt. Eine vergleichbare Sanitärarmatur ist auch aus der AT 405 968 B bekannt. Bei solchen Sanitärarmaturen können die Klammer und somit die Zuführschläuche nicht ohne Demontage des Mischventils aus dem Armaturengehäuse gelöst werden, wodurch ein hoher Wartungsaufwand entsteht.

Aufgabe der Erfindung ist es daher, die mit Bezug auf den Stand der Technik geschilderten Probleme zumindest teilweise zu lösen und insbesondere eine Sanitärarmatur anzugeben, mit der eine Kontaminierung des Trinkwassers mit Nickel vermeidbar und die zudem leicht zu warten ist.

Diese Aufgabe wird gelöst mit einer Sanitärarmatur gemäß den Merkmalen des unabhängigen Patentanspruchs. Weitere vorteilhafte Ausgestaltungen der Sanitärarmatur sind in den abhängig formulierten Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Sanitärarmatur wird insbesondere im Zusammenhang mit Waschbecken, Spülbecken, Duschen oder Badewannen verwendet. Die Sanitärarmatur weist ein Armaturengehäuse mit einem Mischventil zum Mischen eines Kaltwassers und Warmwassers zu einem Mischwasser mit einer gewünschten Mischwassertemperatur auf. Das Armaturengehäuse besteht zumindest teilweise aus Kunststoff und/oder Metall, wie zum Beispiel Messing. Weiterhin ist das Armaturengehäuse insbesondere an einer Montageöffnung des Waschbeckens, Spülbeckens, der Dusche oder der Badewanne befestigbar. Das Mischventil ist insbesondere über einen Stellgriff der Sanitärarmatur betätigbar. Über den Stellhebel kann das Mischventil insbesondere geöffnet, geschlossen und/oder eine gewünschte Mischwassertemperatur eingestellt werden. Bei dem Mischventil handelt es sich insbesondere um eine Mischkartusche, wie zum Beispiel eine sogenannte EHM-Kartusche.

Der Sanitärarmatur wird über einen Kaltwasserschlauch Kaltwasser und über einen Warmwasserschlauch Warmwasser zugeführt. Das Kaltwasser weist insbesondere eine Kaltwassertemperatur von 0 °C - 40 °C und/oder das Warmwasser eine Warmwassertemperatur von 40 °C - 80 °C auf. Der Kaltwasserschlauch und der Warmwasserschlauch münden in einen Kunststoffeinsatz. Bei dem Kunststoffeinsatz handelt es sich insbesondere um einen zumindest teilweise zylindrischen Körper. Weiterhin weist der Kunststoffeinsatz Strömungskanäle für das Kaltwasser, Warmwasser und für das durch das Mischventil gemischte Mischwasser auf. Das Kaltwasser und das Warmwasser sind über den Kunststoffeinsatz dem Mischventil zuführbar, in dem das Kaltwasser und das Warmwasser zu dem Mischwasser mischbar sind. Das Mischwasser ist sodann dem Kunststoffeinsatz rückführbar und anschließend über einen in dem Kunststoffeinsatz eingesteckten Mischwasserschlauch zu einem Auslauf der Sanitärarmatur führbar.

Der Kaltwasserschlauch, Warmwasserschlauch und/oder der Mischwasserschlauch ist mit einer stirnseitig in den Kunststoffeinsatz eingesetzten Klammer an dem Kunststoffeinsatz befestigt. Dabei kann eine separate Klammer für einen oder jeweils alle angeführten Schläuche vorgesehen sein, es ist aber auch möglich, dass mit einer einzelnen Klammer je ein einzelner Schlauch oder mehrere Schläuche fixiert sind. Unter "stirnseitig" eingesetzt ist insbesondere die Anordnung der Klammer in eine Stirnfläche (also nicht (nur) an einem Umfang) des Kunststoffeinsatzes zu verstehen. Unter einer Stirnfläche des Kunststoffeinsatzes ist wiederum insbesondere eine in eine Längsrichtung des Kunststoffeinsatzes weisende Oberfläche des Kunststoffeinsatzes zu verstehen. Die Klammer ist zudem in diejenige Stirnfläche des Kunststoffeinsatzes einsetzbar, die nach der Montage der Sanitärarmatur nächstliegend zum Mischventil liegt.

Der Kaltwasserschlauch, Warmwasserschlauch und/oder der Mischwasserschlauch besteht insbesondere aus einem gesundheitlich unbedenklichen Material, wie zum Beispiel Kunststoff. Hierdurch wird sichergestellt, dass das Trinkwasser nicht in Kontakt mit gesundheitlich bedenklichen Materialien, wie zum Beispiel Messing, gelangt. Im Wartungsfall der Sanitärarmatur, beispielsweise bei einem defekten Kaltwasserschlauch, Warmwasserschlauch und/oder Mischwasserschlauch, muss nicht die gesamte Sanitärarmatur demontiert werden. Stattdessen kann das Mischventil aus dem Armaturengehäuse gezogen werden, wodurch nach Lösen der Klammer der Kaltwasserschlauch, Warmwasserschlauch und/oder Mischwasserschlauch auswechselbar sind. Weiterhin kann eine Variantenreduktion erreicht werden, weil keine Rücksicht auf den Einsatz von verschiedenen Messingmaterialien genommen werden muss. Zudem ist eine galvanische Korrosion durch den Einsatz des Kunststoffeinsatzes vermeidbar.

Ebenfalls vorteilhaft ist es, wenn die Klammer bündig mit der Stirnfläche des Kunststoffeinsatzes abschließt. Unter "bündig" ist insbesondere zu verstehen, dass die in die Stirnfläche eingesetzte Klammer eine (entsprechend geformte) Ausnehmung für die Klammer in der Stirnfläche derart ausfüllt, dass die Klammer mit der Stirnfläche eine im Wesentlichen plane Oberfläche des Kunststoffeinsatzes bildet.

Das Mischventil ist auf der Stirnfläche des Kunststoffeinsatzes befestigt, sodass die Klammer gegen ein Lösen von dem Kunststoffeinsatz gesichert ist. Dies bedeutet insbesondere, dass das Mischventil derart auf der Stirnfläche des Kunststoffeinsatzes befestigt ist, dass die Klammer gegen das Mischventil anliegt.

Darüber hinaus ist es vorteilhaft, wenn der Kaltwasserschlauch, der Warmwasserschlauch oder der Mischwasserschlauch an einem Einsteckende einen Kragen aufweist, über den der Kaltwasserschlauch, der Warmwasserschlauch oder der Mischwasserschlauch formschlüssig mit der Klammer an dem Kunststoffeinsatz befestigbar ist. Bei dem Einsteckende handelt es sich insbesondere um einen Bereich des Kaltwasserschlauchs, des Warmwasserschlauchs und/oder des Mischwasserschlauchs, mit dem der Kaltwasserschlauch, der Warmwasserschlauch und/oder der Mischwasserschlauch in den Kunststoffeinsatz einsteckbar ist. An dem Einsteckende ist insbesondere ein umlaufender Kragen ausgebildet, der als Anlagefläche, Haltefläche, Raste, etc. für die Klammer dient.

Des Weiteren ist es vorteilhaft, wenn die Klammer orthogonal zu einer Längsachse des Kaltwasserschlauchs, des Warmwasserschlauchs oder des Mischwasserschlauchs in dem Kunststoffeinsatz einsetzbar ist.

Ebenfalls vorteilhaft ist es, wenn die Klammer einen Basisabschnitt, insbesondere zur Positionierung nahe der Stirnfläche des Kunststoffeinsatzes, und mindestens einen sich von dem Basisabschnitt hervor erhebenden Vorsprung umfasst, insbesondere zum formschlüssigen Eingriff mit dem Kaltwasserschlauch, Warmwasserschlauch und/oder Mischwasserschlauch. Dabei kann der Basisabschnitt im Querschnitt dickwandiger ausgeführt sein als der Vorsprung. Der Vorsprung kann nach Art eines Riegels, Stegs, etc. ausgeführt sein, der von dem Basisabschnitt stabilisiert gehalten ist.

Ebenfalls vorteilhaft ist es, wenn die Klammer einen L- oder T-förmigen Querschnitt aufweist, insbesondere mit der Ausprägung eines Basisabschnitts mit Vorsprung.

Zudem ist es vorteilhaft, wenn der Kunststoffeinsatz eine U-förmige Ausnehmung für die Klammer aufweist. Die U-förmige Ausnehmung ist einfach herstellbar, unterstützt die Montage der Klammer und kann insbesondere zur Einbettung des zuvor beschriebenen Basisabschnitts dienen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine Sanitärarmatur in einem Längsschnitt; und
- Fig. 2:: einen Kunststoffeinsatz der Sanitärarmatur in einer perspektivischen Darstellung.

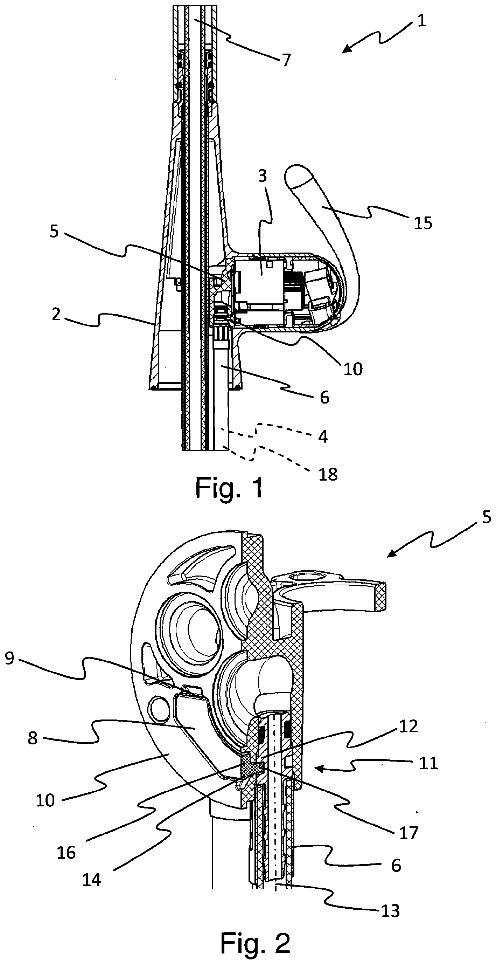

Die Fig. 1 zeigt eine Sanitärarmatur 1, die ein Armaturengehäuse 2 mit einem Mischventil 3 zum Mischen eines Kaltwassers und eines Warmwassers zu einem Mischwasser mit einer gewünschten Mischwassertemperatur aufweist. Der Sanitärarmatur 1 wird über einen Kaltwasserschlauch 4, der durch den dargestellten Mischwasserschlauch 6 verdeckt wird, Kaltwasser und über einen ebenfalls verdeckten Warmwasserschlauch 18 Warmwasser zugeführt. Der Kaltwasserschlauch 4 und der Warmwasserschlauch 18 münden in einen Kunststoffeinsatz 5. Das Kaltwasser und Warmwasser sind über den Kunststoffeinsatz 5 dem Mischventil 3 zuführbar, das auf einer Stirnfläche 10 des Kunststoffeinsatzes 5 angeordnet ist. Das Mischventil 3 ist über einen Stellhebel 15 der Sanitärarmatur 1 betätigbar. Das durch das Mischventil 3 gemischte Mischwasser ist dem Kunststoffeinsatz 5 rückführbar und über einen in den Kunststoffeinsatz 5 eingesteckten Mischwasserschlauch 6 zu einem Auslauf 7 der Sanitärarmatur 1 leitbar.

Die Fig. 2 zeigt den Kunststoffeinsatz 5 der in der Fig. 1 gezeigten Sanitärarmatur 1 in einem perspektivischen Teilschnitt. Zu erkennen ist hier insbesondere der mit einem Einsteckende 11 in den Kunststoffeinsatz 5 eingesteckte Mischwasserschlauch 6. Der Mischwasserschlauch 6 weist an dem Einsteckende 11 einen umlaufenden Kragen 12 auf, über den der Mischwasserschlauch 6 mittels einer Klammer 8 formschlüssig an dem Kunststoffeinsatz 5 befestigbar ist. Die Klammer 8 ist in einer hier nur halb dargestellten U-förmige Ausnehmung 9 der Stirnfläche 10 des Kunststoffeinsatzes 5 eingesteckt und schließt bündig mit der Stirnfläche 10 ab. Weiterhin ist die Klammer 8 orthogonal zu einer Längsachse 13 des Mischwasserschlauchs 6 in den Kunststoffeinsatz 5 eingesteckt und weist einen Querschnitt 14 auf, der durch einen Basisabschnitt 16 und einen Vorsprung 17 gekennzeichnet ist.

Durch die vorliegende Erfindung ist eine Kontaminierung eines Trinkwassers mit Nickel vermeidbar und zudem eine Wartung einer Sanitärarmatur mit geringem Aufwand möglich.

### Bezugszeichenliste

- 1: Sanitärarmatur
- 2: Armaturengehäuse
- 3: Mischventil
- 4: Kaltwasserschlauch
- 5: Kunststoffeinsatz
- 6: Mischwasserschlauch
- 7: Auslauf
- 8: Klammer
- 9: Ausnehmung
- 10: Stirnfläche
- 11: Einsteckende
- 12: Kragen
- 13: Längsachse
- 14: Querschnitt
- 15: Stellhebel
- 16: Basisabschnitt
- 17: Vorsprung
- 18: Warmwasserschlauch

## Patentansprüche

1. Sanitärarmatur (1), aufweisend ein Armaturengehäuse (2) mit einem Mischventil (3) zum Mischen eines Kaltwassers und Warmwassers zu einem Mischwasser mit einer gewünschten Mischwassertemperatur, wobei ein Kaltwasserschlauch (4) für das Kaltwasser und ein Warmwasserschlauch (18) für das Warmwasser in einen Kunststoffeinsatz (5) münden, sodass das Kaltwasser und das Warmwasser über den Kunststoffeinsatz (5) dem Mischventil (3) zuführbar ist, wobei das Kaltwasser und das Warmwasser nach dem Mischen als Mischwasser dem Kunststoffeinsatz (5) rückführbar und über einen in den Kunststoffeinsatz (5) eingesteckten Mischwasserschlauch (6) zu einem Auslauf (7) der Sanitärarmatur (1) führbar ist, wobei der Kunststoffeinsatz (5) eine Stirnfläche (10) aufweist, **dadurch gekennzeichnet, dass** der Kaltwasserschlauch (4), der Warmwasserschlauch (18) und/oder der Mischwasserschlauch (6) mit einer stirnseitig in den Kunststoffeinsatz (5) eingesetzten Klammer (8) an dem Kunststoffeinsatz (5) befestigt sind, wobei das Mischventil (3) auf der Stirnfläche (10) des Kunststoffeinsatzes (5) befestigbar ist, sodass die Klammer (8) gegen ein Lösen von dem Kunststoffeinsatz (5) gesichert ist.

2. Sanitärarmatur (1) nach Patentanspruch 1, wobei die Klammer (8) bündig mit der Stirnfläche (10) des Kunststoffeinsatzes (5) abschließt.

3. Sanitärarmatur (1) nach einem der vorhergehenden Patentansprüche, wobei der Kaltwasserschlauch (4), der Warmwasserschlauch (18) oder der Mischwasserschlauch (16) an einem Einsteckende (11) einen Kragen (12) aufweisen, über den der Kaltwasserschlauch (4), der Warmwasserschlauch (18) oder der Mischwasserschlauch (6) formschlüssig mit der Klammer (8) an dem Kunststoffeinsatz (5) befestigbar ist.

4. Sanitärarmatur (1) nach einem der vorhergehenden Patentansprüche, wobei die Klammer (8) orthogonal zu einer Längsachse (13) des Kaltwasserschlauchs (4), des Warmwasserschlauchs (18) oder des Mischwasserschlauch (6) in dem Kunststoffeinsatz (5) einsetzbar ist.

5. Sanitärarmatur (1) nach einem der vorhergehenden Patentansprüche, wobei die Klammer (8) einen Basisabschnitt (16) und mindestens einen sich von dem Basisabschnitt (16) hervor erhebenden Vorsprung (17) umfasst.

6. Sanitärarmatur (1) nach einem der vorhergehenden Patentansprüche, wobei der Kunststoffeinsatz (5) eine U-förmige Ausnehmung (9) für die Klammer (8) aufweist.

## Claims

1. A sanitary fitting (1) having a fitting housing (2) with a mixer valve (3) for mixing cold water and hot water to form mixed water with a desired mixed water temperature, wherein a cold water hose (4) for the cold water and a hot water hose (18) for the hot water open into a plastic inset (5) such that the cold water and the hot water can be supplied to the mixer valve (3) via the plastic inset (5), wherein the cold water and the hot water, after mixing, can be fed back as mixed water to the plastic inset (5) and conveyed to an outlet (7) of the sanitary fitting (1) via a mixed water hose (6) plugged into the plastic inset (5), wherein the plastic inset (5) has an end face (10), **characterized in that** the cold water hose (4), the hot water hose (18) and/or the mixed water hose (6) are fixed to the plastic inset (5) with a clamp (8) inserted in the end face of the plastic inset (5), wherein the mixer valve (3) can be fixed on the end face (10) of the plastic inset (5) such that the clamp (8) is secured against loosening from the plastic inset (5).

2. The sanitary fitting (1) according to Claim 1, wherein the clamp (8) ends flush with the end face (10) of the plastic inset (5).

3. The sanitary fitting (1) according to any one of the preceding claims, wherein the cold water hose (4), the hot water hose (18) or the mixed water hose (6) have, on a plug-in end (11), a collar (12) via which the cold water hose (4), the hot water hose (18) or the mixed water hose (6) can be fixed in a positive-locking manner to the plastic inset (5) by means of the clamp (8).

4. The sanitary fitting (1) according to any one of the preceding claims, wherein the clamp (8) can be inserted in the plastic inset (5) orthogonally to a longitudinal axis (13) of the cold water hose (4), of the hot water hose (18) or of the mixed water hose (6).

5. The sanitary fitting (1) according to any one of the preceding claims, wherein the clamp (8) comprises a base section (16) and at least one projection (17) projecting from the base section (16).

6. The sanitary fitting (1) according to any one of the preceding claims, wherein the plastic inset (5) has a u-shaped recess (9) for the clamp (8).

## Revendications

1. Robinetterie sanitaire (1), comportant un corps de robinet (2) pourvu d'une vanne mélangeuse (3), destinée à mélanger une eau froide et une eau chaude en une eau mitigée à une température souhaitée d'eau mitigée, un flexible d'eau froide (4) pour l'eau froide et un flexible d'eau chaude (18) pour l'eau chaude débouchant dans un insert (5) en matière plastique, de telle sorte que l'eau froide et l'eau chaude soient susceptibles d'être alimentées par l'intermédiaire de l'insert (5) en matière plastique vers la vanne mélangeuse (3), après le mélange, l'eau froide et l'eau chaude étant susceptibles d'être ramenées sous forme d'eau mitigée vers l'insert (5) en matière plastique et étant susceptibles d'être conduites par l'intermédiaire d'un flexible d'eau mitigée (6) enfiché dans l'insert (5) en matière plastique vers une sortie (7) de la robinetterie sanitaire (1), l'insert (5) en matière plastique comportant une face frontale (10), **caractérisée en ce que** le flexible d'eau froide (4), le flexible d'eau chaude (18) et/ou le flexible d'eau mitigée (6) sont fixés sur l'insert (5) en matière plastique par une pince (8) insérée sur la face frontale dans l'insert (5) en matière plastique, la vanne mélangeuse (3) étant susceptible d'être fixée sur la face frontale (10) de l'insert (5) en matière plastique, de telle sorte que la pince (8) soit sécurisée contre une désolidarisation de l'insert (5) en matière plastique.

2. Robinetterie sanitaire (1) selon la revendication 1, la pince (8) se terminant à fleur de la face frontale (10) de l'insert (5) en matière plastique.

3. Robinetterie sanitaire (1) selon l'une quelconque des revendications précédentes, sur une extrémité d'enfichage (11), le flexible d'eau froide (4), le flexible d'eau chaude (18) ou le flexible d'eau mitigée (6) comportant une collerette (12), par l'intermédiaire de laquelle le flexible d'eau froide (4), le flexible d'eau chaude (18) ou le flexible d'eau mitigée (6) est susceptible d'être fixé par complémentarité de forme à l'aide de la pince (8) sur l'insert (5) en matière plastique.

4. Robinetterie sanitaire (1) selon l'une quelconque des revendications précédentes, la pince (8) étant insérable dans l'insert (5) en matière plastique de manière orthogonale à un axe longitudinal (13) du flexible d'eau froide (4), du flexible d'eau chaude (18) ou du flexible d'eau mitigée (6).

5. Robinetterie sanitaire (1) selon l'une quelconque des revendications précédentes, la pince (8) comprenant un segment de base (16) et au moins une saillie (17) s'élevant à partir du segment de base (16) .

6. Robinetterie sanitaire (1) selon l'une quelconque des revendications précédentes, l'insert (5) en matière plastique comportant un évidement (9) en forme de U pour la pince (8).
